# EUROPÄISCHE PATENTSCHRIFT

(11) **EP 3 706 535 B1**
(45) Veröffentlichungstag und Bekanntmachung des Hinweises auf die Patenterteilung: **10.04.2024**
(21) Anmeldenummer: 18803382.3
(22) Anmeldetag: 09.11.2018
(51) Int. Cl.: A01C 5/06, A01C 7/20

(54) **SÄSCHAR EINER LANDWIRTSCHAFTLICHEN MASCHINE MIT ZUGEHÖRIGEM TIEFENFÜHRUNGSRAD**
SEED DRILL COULTER OF AN AGRIGULTURAL MACHINE HAVING AN ASSOCIATED DEPTH GAUGE WHEEL
SOC DE SEMOIR POUR MACHINES AGRICOLES MUNI D'UNE ROUE DE GUIDAGE EN PROFONDEUR CORRESPONDANTE

(30) Priorität: 10.11.2017 DE 102017220113
(43) Veröffentlichungstag der Anmeldung: 16.09.2020
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes
(86) Internationale Anmeldenummer: PCT/EP2018/080784
(87) Internationale Veröffentlichungsnummer: WO 2019/092188

(56) Entgegenhaltungen:
- EP-A1- 2 502 476
- WO-A1-2010/102359
- WO-A2-98/57530
- CA-A1- 2 719 667
- US-A- 2 120 331

## Beschreibung

Die vorliegende Erfindung betrifft ein Säschar einer landwirtschaftlichen Maschine zur Verteilung von landwirtschaftlichen Verteilgütern mit einem zugehörigen Tiefenführungsrad mit den Merkmalen des unabhängigen Anspruchs 1.

Säschare finden in der Landwirtschaft zum Ausbringen von flüssigen und/oder festen Verteilgütern wie Saatgut, Dünger oder dergl. Verwendung. In Abhängigkeit des jeweiligen Verteilguts und der jeweiligen Bodenbedingungen können diese Säschare verschiedenste Ausgestaltungsformen aufweisen. So geht aus der EP 2 238 820 B1 ein Säschar hervor, welches in einer landwirtschaftlichen Einzelkornsämaschine verwendet wird.

Aus der DE 10 2008 044 520 A1 geht ein Säschar hervor, welches als sog. Doppelscheibenschar ausgeführt ist.

Zudem geht aus der EP 3 021 655 A1 ein Säschar hervor, welches als sog. Einscheibenschar ausgeführt ist.

Die US 2120331 A zeigt eine Sämaschine in Form einer Korndrillmaschine, welche einen Kornkasten aufweist, der an jedem Ende von einem Rad getragen wird. Die Kornsämaschine umfasst eine Vielzahl von Scheibenfurchenöffnern. Jeder Scheibe ist ein flexibles Kornabgaberohr zugeordnet, dessen oberes Ende in Verbindung mit einer Zuführvorrichtung angeordnet ist, die mit dem Kornkasten in Verbindung steht. Das dem Rohr zugeführte Saatgut fällt in die von einem Öffner geschnittene Furche. Um eine gleichmäßige Tiefe zu gewährleisten, ist ein Rad mit dem Furchenöffner verbunden. Das Rad kann mit einer Felge versehen sein, die eng um die Felge des Rades passt und daran mit Schrauben befestigt werden kann, die durch Schlitze in der Felge verlaufen und in die Felge des Rades eingeschraubt werden. Die Felge kann seitlich verstellt werden, um die Breite der lasttragenden Fläche des Rades zu verändern.

Allen Säscharen gemeinsam ist, dass diese jeweils zumindest eine in einem Winkel zu einer Fahrtrichtung angestellte Sechscheibe zur Erzeugung einer Saatfurche aufweisen oder dass diese zur Erzeugung einer Saatfurche Furchenwerkzeuge wie bspw. Scharkufen oder Zinkenwerkzeuge oder dergl. aufweisen. In die somit erzeugte Saatfurche wird anschließend das jeweilige Verteilgut abgelegt. Um eine gewünschte Ablagetiefe bzw. Saattiefe des Säschar zu erreichen, ist diesem bzw. sind neben der Sechscheibe und neben den Furchenwerkzeugen jeweils Tiefenführungsräder in Form von walkenden Gummirädern oder Kunststoffrädern angeordnet.

Diese Art der aus Gummimaterial oder Kunststoffmaterial gebildeten Tiefenführung bzw. der Tiefenführungsräder in Form von Gummirädern oder Kunststoffrädern hat sich, insbesondere durch deren Walkverhalten in den meisten Einsatzfällen bewährt. Jedoch bei schwierigen Einsatzverhältnissen, insbesondere auf sehr nassen, klebrigen und schweren Böden, kommt es aufgrund von anhaftenden Bodenteilen an den Tiefenführungsrädern und den Sechscheiben zu Verstopfungen. Zudem kommt es in Bereichen, welche von den Tiefenführungsrädern überfahren werden, zu Verschlämmungen. Unter diesen schwierigen Verhältnissen musste bisher das Ausbringen von Saatgut unterbrochen werden. Zwar ist es bekannt an den Säscharen sog. Abstreifer zum Abschaben der anhaftenden Erde anzubringen, doch sind diese in der Regel teuer und nur durch aufwendige Halterungen montierbar. Auch unterliegen diese in der Regel einem hohen Verschleiß. Zudem müssen diese exakt eingestellt bzw. angebracht sein, um eine sichere Abstreiffunktion zu gewährleisten.

Der Erfindung liegt somit die Aufgabe zugrunde, ein Säschar auch bei schwierigen Einsatzverhältnissen universell und dauerhaft einsetzbar zu machen.

Diese Aufgabe der Erfindung wird durch ein Säschar einer landwirtschaftlichen Maschine zur Verteilung von landwirtschaftlichen Verteilgütern mit einem verbesserten Tiefenführungsrad mit den Merkmalen des Anspruchs 1 gelöst. Weitere vorteilhafte Ausgestaltungen und Weiterbildungen der Erfindung werden in den jeweiligen abhängigen Ansprüchen angegeben.

Zur Lösung der genannten Aufgaben schlägt die Erfindung ein Säschar vor, welches in einer landwirtschaftlichen Maschine zur Verteilung von landwirtschaftlichen Verteilgütern wie Saatgut und/oder Dünger verwendet wird. Das Säschar kann hierbei sowohl Saatgut als auch Dünger gemeinsam oder Saatgut oder Dünger ausbringen. Die Verteilgüter können sowohl in flüssiger als auch in fester bzw. granularer Form vorliegen. Das Säschar umfasst zunächst eine Scharhalterung, mittels welcher das Säschar an einer Rahmenkonstruktion einer landwirtschaftlichen Maschine angebaut werden kann. Die Scharhalterung kann hierbei insbesondere so ausgeführt sein, dass das Säschar höhenverstellbar bzw. schwenkbar zur Rahmenkonstruktion ist, wobei hierfür als Schwenklagerung bspw. ein Parallelogramm oder eine Drehlagerung oder dergl. verwendet werden kann. Die Schwenklagerung ist insbesondere zwischen der Rahmenkonstruktion und dem Säschar angebracht. Auch kann die Scharhalterung derartig ausgeführt oder an der landwirtschaftlichen Maschine bzw. einer Rahmenkonstruktion dieser angebracht sein, dass eine auf das Säschar wirkende Kraft, welche auch als Schardruck bezeichnet werden kann, mittels einer bekannten Verstellvorrichtung variabel verändert bzw. eingestellt werden kann, um somit eine exakte Anpassung an die jeweiligen Bodenbedingungen zu erreichen. Die Verstellvorrichtung kann bspw. ein hydraulisch und/oder ein pneumatisch und/oder ein elektrisch betriebener Aktor sein und mittels einer elektrischen und/oder hydraulischen und/oder pneumatischen Steuerungsvorrichtung angesteuert werden. Auch kann die Verstellvorrichtung jeweils manuell oder automatisiert angesteuert bzw. geregelt werden.

An der Scharhalterung sind jeweils die das Säschar bildenden Komponenten angebaut. Zur Erzeugung einer Saatfurche, in welche die jeweiligen Verteilgüter abgelegt werden, kann bzw. können der Scharhalterung als furchenziehendes Werkzeug zumindest eine oder zwei in einem Winkel zur Fahrrichtung angestellte und drehbar gelagerte Sechscheibe(n) angebracht sein. Bei einer Ausführung mit zwei derartigen Sechscheiben können diese jeweils spiegelbildlich bzw. in entgegengesetzter Ausrichtung zueinander angeordnet sein, aber sie können auch jeweils unterschiedliche Ausrichtungen aufweisen. So wäre es auch denkbar, dass eine Sechscheibe in einem Winkel zur Fahrtrichtung ausgerichtet ist und eine zweite Sechscheibe eine parallele Ausrichtung zu einer Fahrtrichtung aufweist. Das Säschar ist somit in Abhängigkeit der Anzahl an Sechscheiben als Einscheibenschar oder als Doppelscheibenschar ausgeführt. Zudem kann bzw. können die eine oder mehreren Sechscheiben ebenso in einem Winkel oder in verschiedenen Winkel zu einer aufrechten in Fahrtrichtung verlaufenden Achse angeordnet sein. Auch wäre es denkbar, dass an der Scharhalterung eine oder zwei parallel zur Fahrrichtung orientierte Sechscheiben angebracht sind. Auch wäre es denkbar wäre, dass der einen oder den zwei Sechscheiben jeweils ein zusätzliches furchenziehendes Werkzeug bzw. Furchenwerkzeug zugeordnet ist, wobei dieses neben und/oder hinter der bzw. den Sechscheiben angeordnet sein kann. Als Furchenwerkzeug kann bspw. eine sog. Scharkufe oder ein Zinkenwerkzeug oder ein Schar oder dergl. aus dem Stand der Technik bekanntes Furchenwerkzeug verwendet werden. Die Sechscheiben können sowohl eine gerade bzw. plane Oberfläche als auch eine wellenartige Oberfläche aufweisen und als sog. Wellsech ausgebildet sein. Somit wäre auch ein Säschar denkbar, welches sich aus einer Kombination aus einer Sechscheibe und einem Furchenwerkzeug zusammensetzt.

Darüber hinaus umfasst das Säschar bzw. dem Säschar räumlich zugeordnet ist zumindest ein Saatrohr zum Transport bzw. zur Führung des Verteilguts aus einer Dosiervorrichtung oder einer Verteilereinheit zur mittels der furchenziehenden Werkzeuge erzeugten Saatfurche, wobei das Saatrohr hierbei zwischen den zwei bzw. neben der einen Sechscheibe angeordnet ist und/oder in eine Scharkufe integriert sein kann. Auch kann das Saatrohr einer Sechscheibe oder einem Furchenwerkzeug zugeordnet bzw. auch nachgeordnet sein. Die Dosiervorrichtung kann am Säschar angebracht sein oder beabstandet von diesem, sowie als Einzelkorndosiervorrichtung als auch als Volumetrischedosiervorrichtung oder dergl. ausgeführt sein. Um die Saatfurche nach Ablage des Verteilguts wieder zu schließen sowie das Saatgut für einen guten Bodenschluss anzudrücken, kann das Säschar wiederum eine oder mehrere Druckrollen umfassen. Die Druckrollen können sowohl in einem Winkel zu einer aufrechten in Fahrtrichtung verlaufenden Achse, als auch quer in einem Winkel zur Fahrrichtung angeordnet sein.

Zur Tiefenführung bzw. zur Einstellung der Tiefe der Saatfurche ist dem Säschar bzw. dessen wenigstens einer Sechscheibe und/oder wenigstens einem Furchenwerkzeug wiederum zumindest ein Tiefenführungsrad zugeordnet. Insbesondere ist dieses Tiefenführungsrad bzw. sind die Tiefenführungsräder wiederum neben der einen Sechscheibe oder jeweils neben den zwei Sechscheiben angeordnet, vorzugsweise auf der abgewandten Seite des Saatrohrs. Zudem kann das Tiefenführungsrad unabhängig von der Sechscheibe in dessen Höhe, d.h. in dessen Abstand zu einem tiefsten Punkt der Sechscheibe oder des Furchenwerkzeugs verstellbar sein.

Um ein Säschar zu schaffen, dass auch bei schwierigen Einsatzverhältnissen universell und dauerhaft eingesetzt werden kann, ist vorgesehen, dass das Tiefenführungsrad als Umfangsfläche bzw. als Lauffläche einen Ring aufweist, dessen Breite größer ist als dessen Höhe. Insbesondere ist der Ring als federnder Schwingungen durchführender Ring gebildet, wobei dessen Schwingungen bzw. dessen Schwingungsamplitude mittels eines mit einer Verstellvorrichtung variabel veränderbaren auf das Säschar ausgeübten Schardrucks hervorgerufen wird.

Auch kann der Ring als formstabiler Ring ausgeführt sein und zumindest abschnittweise eine U-förmige oder T-förmige oder V-förmige oder W-förmige oder quer zur Fahrtrichtung geneigte Umfangsfläche aufweisen. Ein als federnder, Schwingungen ausführender Ring kann entsprechend konturiert sein, aber kann auch eine anders ausgebildete Umfangsfläche, insbesondere eine plane Umfangsfläche aufweisen.

Insbesondere ist der Ring gegenüber den aus dem Stand der Technik bekannten Tiefenführungsrädern nicht walkend ausgebildet, d.h. das Tiefenführungsrad bzw. die bei einem Doppelscheibenschar evtl. vorhandenen zwei Tiefenführungsräder sind vorteilhafterweise nicht als walkendes Gummirad oder Kunststoffrad, bestehend aus Felge oder Aufnahme und walkenden Gummiring bzw. Laufkranz ausgebildet, sondern als biegsamer bzw. federnder, durch einen mittels einer Verstellvorrichtung variabel veränderbaren Schardruck hervorgerufene, Schwingungen durchführenden Ring aus Eisen, Stahl, Leichtmetall oder Kunststoff. In diesem Zusammenhang sei angemerkt, dass der Begriff nicht walkend hier derartig zu verstehen ist, dass der Ring nicht als Gummirolle oder Gummirad gebildet ist, oder dass dieser nicht als flexible walkende Kunststoffrolle gebildet ist, welche in der Regel durch deren Walkeigenschaften bzw. durch deren Walkverhalten sich jeweils mit deren Auflagefläche entlang einer Bodenoberfläche abrollen und keine Feinerde hinterlassen, wodurch durch bspw. ergiebige Regenfälle Verschlämmungen entstehen können und somit der Feldaufgang und das Wachstum der Pflanzen negativ beeinträchtigt wird. Zudem weisen derartige walkende Tiefenführungsräder jeweils große Auflageflächen auf, wodurch wiederum jeweils eine große Bodenoberfläche überfahren wird und somit wiederum die Gefahr der Verschlämmung vergrößert wird.

Dementgegen ist der die Umfangsfläche des Tiefenführungsrades bildende Ring derartig aufgebaut, dass dieser durch die nicht walkenden Eigenschaften jeweils eine feinkrümelige Bodenstruktur bzw. Bodenoberfläche erzeugt, wodurch ein Verschlämmen der Bodenoberfläche verhindert wird. Dies kann zudem durch eine glatte Oberfläche bzw. durch eine geringe Rauheit aufweisende Umfangsfläche des Rings noch weiter verbessert werden. Auch können entsprechende Materialen eingesetzt werden, an denen ein Anhaften von Erde verhindert wird. Auch kann die zumindest abschnittweise konturierte Umfangsfläche jeweils so ausgebildet sein, dass diese eine entsprechende feinkrümelige Bodenstruktur erzeugt und dass Erde nicht an dieser anhaften kann, was ebenso durch eine geringe Rauheit der Umfangsfläche erreichbar ist. Durch eine derartige Ausführung des Rings kann das Säschar auch bei feuchten klebringen Bodenbedingungen noch eingesetzt werden, ohne hierbei das Verteilergebnis negativ zu beeinflussen.

Zudem wird eine feinkrümelige Bodenstruktur durch einen erfindungsgemäßen Ring dahingehend erreicht, dass dieser zwar bspw. durch einen auf das Säschar bzw. den Ring wirkenden Schardruck entsprechend verformt wird, d.h. entsprechend einer Größe einer variabel einstellbaren Kraft sich verbiegen kann, dieser jedoch dennoch nur eine geringe Auflagefläche auf der Bodenoberfläche aufweist. Durch diese Biegsamkeit entstehen insbesondere Schwingungen und Vibrationen, durch welche jeweils eine feinkrümelige Bodenstruktur entsteht. Zudem kann an den Ringen durch die Schwingungen Erde nur in geringem Umfang anhaften, wodurch mittels des erfindungsgemäßen Rings wiederum der Selbstreinigungseffekt des Säschar stark verbessert wird und zudem für das Tiefenführungsrad keinerlei Abstreifer oder Reinigungselemente benötigt werden. Dabei kann die jeweilige Schwingungsamplitude des Rings durch den variabel veränderbaren Schardruck an die jeweiligen Bodenbedingungen angepasst werden.

Neben einem entsprechend biegsam, federnd ausgeführten Ring wäre es auch denkbar, einen formstabilen, nicht walkenden Ring zu verwenden, welcher jedoch eine entsprechend konturierte oder perforierte Umfangsfläche aufweist, mittels welcher wiederum eine feinkrümelige Bodenoberfläche erzeugt wird. Hierbei können bspw. Kunststoffringe oder Metallringe oder dergl. Ringe eingesetzt werden, wobei auch wiederum ein derartiger Ring eine Umfangsfläche aufweist, welche breiter ist als dessen Höhe, d.h. besitzt bspw. der Ring eine V-förmige Umfangsfläche, ist die Öffnung des als V-förmig gebildeten Rings breiter als die Höhe des als V-förmig gebildeten Rings. Die Höhe des Rings wird somit durch bspw. dessen Materialstärke oder durch die Kontur der Umfangsfläche definiert.

Der die Umfangsfläche bzw. Lauffläche des Tiefenführungsrad bildenden Rings ist aus zwei, drei oder mehr, insbesondere bogenförmigen Ringsegmenten gebildet. Insbesondere bilden jedoch drei oder vier Ringsegmente eine Umfangsfläche bzw. eine Lauffläche. Die Ringsegmente können hierbei wiederum sternförmig an einer Lagerung des Tiefenführungsrads angeordnet sein. Ebenso kann die Umfangsfläche kontinuierlich aber auch unterbrochen sein. Die Ringsegmente können hierbei zudem aus einem Metallwerkstoff oder Stahl oder Kunststoffwerkstoff oder dergl. nicht walkenden Material gefertigt sein. Auch eine Kombination aus einem Metall- und einem Kunststoffmaterial wäre denkbar. Dies hätte insbesondere dahingehend den Vorteil, dass die Ringe bzw. die Ringsegmente so gestaltet werden können, dass diese zwar eine ausreichende Stabilität aufweisen, diese jedoch zudem noch ausreichend federnd sind.

Insbesondere sind die als federnde, Schwingungen ausführenden Ringe bzw. die Ringsegmente aus einem federnden Material, wie bspw. Federblech oder Kupferlegierungen oder federnden Kunststoffen gebildet.

Zudem können die Ringsegmente in Richtung eines Endbereiches nicht befestigt, sondern frei beweglich sein, wodurch wiederum die durch die somit entstehenden Vibrationen und Schwingungen erzeugte feinkrümelige Bodenoberfläche verbessert wird, bzw. wodurch die federnden Eigenschaften der Ringe bzw. der Ringsegmente noch weiter verbessert werden.

Neben einer zumindest einseitigen freien Beweglichkeit eines Ringsegments wäre es jedoch auch denkbar, dass ein Ringsegment bogenförmig ausgebildet ist und an beiden Endbereichen mit einer Lagerung des Tiefenführungsrads oder mit einem die Lagerung aufweisenden Montageelement montiert sind, wobei dies auch Stege oder Speichen sein können, welche zwischen den Ringen und der Lagerung des Tiefenführungsrads angeordnet sind. Auch kann das Ringsegment kreisförmig ausgebildet sein und durch ein Verbindungselement verbunden werden oder diese entsprechend verschweißt sein können.

Die Ringsegmente können bspw. einen bogenförmigen Bereich einschließen der größer oder gleich 45° ist, oder der größer oder gleich 90° ist oder der größer oder gleich 180° ist oder der 360° ist. Ebenso kann vorgesehen sein, dass deren Endbereiche an einer Lagerung bzw. einem Lagerungselement des Tiefenführungsrads und/oder an der Lagerung oder an der Lagerung angebrachten oder anschließenden Montageelementen angebaut sind, wobei auch wiederum derartige Ringe durch eine auf das Säschar ausgeübte Kraft verformt werden und entsprechende Schwingungen ausführen können und diese dementsprechend wiederum eine feinkrümelige Bodenoberfläche erzeugen. Auch können die bogenförmigen Ringsegmente an Speichen oder Stegen des Tiefenführungsrads angebaut sein oder auch gemeinsam derartig verschraubt sein, dass diese sich gegenseitig entsprechend abstützen.

Die jeweilige durch den Ring bzw. die Ringsegmente hervorgerufene Schwingungsamplitude kann durch ein Anschlagelement begrenzt sein. Auch kann dieses Anschlagelement in dessen Höhe verstellbar ausgeführt sein, so dass wiederum die Schwingungsamplitude entsprechend der vorhandenen Ackerfläche bzw. Bodenstruktur angepasst werden kann. Insofern der Ring aus Ringsegmenten mit einem nicht befestigten freien Ende gebildet wird, kann das Anschlagelement jeweils diesem freien Ende zugeordnet sein. Ebenso kann bei einem bogenförmig ausgebildeten Ring dessen Verlauf ebenso ein Anschlagelement zugeordnet sein. Insbesondere kann das Anschlagelement jeweils einem Scheitelpunkt der Ringsegmente bzw. des Rings zugeordnet sein.

Insbesondere ist das Anschlagelement jeweils derartig positioniert bzw. ausgeführt dass der Ring bzw. die Ringsegmente durch eine Verformung an diesem anliegen und dadurch eine kreisförmige Umfangsfläche bilden.

Um zudem ein möglichst kompakt bauendes Säschar zu schaffen sowie um die durch das Säschar überfahrende Bodenfläche noch weiter zu verringern, weisen die Ringe in einer Ausführungsvariante bspw. eine Breite auf die größer oder gleich 40 mm ist und die maximal 120 mm beträgt. Dies wird insbesondere durch die nicht walkenden Eigenschaften der Ringe erreicht, da Tiefenführungsrollen welche bspw. aus Gummi gefertigt sind, durch die walkenden Eigenschaften eine größere Breite aufweisen müssen, um somit eine ausreichende Tiefenführung zu erreichen.

Um zudem das Säschar auch bei schwierigen Einsatzverhältnissen, insbesondere auf sehr nassen, klebrigen und schweren Böden einsetzen zu können, ohne dass es zu Verstopfungen von Komponenten des Säschar oder sogar zu einem Stillstand der Tiefenführungsräder kommt, ist vorgesehen, dass der die Lauffläche bzw. die Umfangsfläche bildende Ring derartig ausgebildet ist, dass dieser gute Eigenantriebseigenschaften aufweist, was insbesondere durch die konturierte Umfangsfläche aber auch durch die biegsamen, federnden bzw. Schwingungen durchführenden Eigenschaften erreicht wird.

Insbesondere ist das Tiefenführungsrad so aufgebaut, dass dieses zwischen der Lageranordnung bzw. der Lagerung oder der Felge und dem die Umfangsfläche bildenden Ring einen Hohlraum bildet. Durch diesen Hohlraum entsteht somit ein zusätzlicher Zerkleinerungseffekt, wodurch zusätzlich feinkrümelige Erde erzeugt wird. Diesen Hohlraum können zudem zur Befestigung der Ringsegmente oder entsprechend der Ausgestaltungsform der Ringsegmente Stege zugeordnet sein, welche somit Speichen bilden, welche wiederum Erde entsprechend zerkleinern können.

In einer bevorzugten Ausführungsform besteht das Tiefenführungsrad aus einer Lagerung, zur Befestigung dieses am Säschar sowie an die Lagerung anschließenden Speichen sowie wiederum an diesen Speichen montierten bzw. von diesen Speichen geführten Ring bzw. Ringsegmenten. Diese Speichen können auch als Anschlagelement dienen. Es wäre auch denkbar, dass die Lagerung und die an diese anschließenden Speichen als einteiliges Gusselement oder Schmiedeelement gefertigt sind, an welches wiederum der Ring bzw. die den Ring bildenden Ringsegmente angebaut werden. Bei einer derartigen Ausführung wäre es denkbar, dass bspw. dass Guss- oder Schmiedeelement aus einem Kunststoffmaterial gefertigt ist und dass der Ring bzw. die Ringsegmente aus federnden Materialien gefertigt sind.

Auch wäre es denkbar, dass die Speichen durch den Ring bzw. durch die Ringsegmente gebildet werden, wozu bspw. auch zwei gegenüberliegende Ringsegmente gemeinsam verschraubt werden oder jeweils wiederum ein Ringsegment an das andere montiert wird. Auch können die Ringsegmente direkt an der Lagerung bzw. an den an der Lagerung vorhandenen Montageelementen angebaut sein. In die Lagerung kann zudem ein Kugellager oder ein Gleitlager oder dergl. eingebaut oder eingepresst aber auch eingegossen sein, um somit wiederum das Tiefenführungsrad zu lagern. Die Lagerung kann zudem die Felge des Tiefenführungsrads bilden. Auch kann das Anschlagelement in eine Speiche integriert sein, so dass die Speiche bspw. an deren Außenkante einen Absatz aufweist, in der das jeweilige Ringsegmente eintaucht.

Eine bevorzugte Ausführungsform des Tiefenführungsrads sieht vor, dass dieses zunächst einen Speichen aufweisenden Grundkörper besitzt. In diesen Grundkörper ist zur drehbaren Montage eine Lagerung bspw. in Form eines Kugellagers eingebaut, eingepresst oder eingegossen. Die Speichen sind jeweils derartig ausgeführt, dass bspw. an einer Umfangsfläche dieser ein federndes Ringsegment montiert werden kann sowie dass die Speiche einen Absatz aufweist, in welche jeweils wiederum ein weiteres Ringsegment durch dessen Verformung eintauchen kann, wodurch das Tiefenführungsrad eine kreisförmige Umfangsfläche bildet. Die Speichen bilden somit bzw. dienen somit auch als Anschlagelement für den Ring bzw. die Ringsegmente. Der Grundkörper kann insbesondere als Gusskörper aus Metall oder Kunststoff gefertigt sein. Auch dieser bspw. drei oder mehr Speichen aufweisen, an welchen somit entsprechend drei oder mehr Ringsegmente angebaut werden können. Insofern der Grundkörper aus Kunststoff oder Aluminium gefertigt ist, können in diesen zur Montage der Ringsegmente und/oder zur Montage der Lagerung auch Metallelemente eingebracht oder eingegossen werden.

Das Tiefenführungsrad ist insbesondere jeweils derartig gefertigt, dass dieses zwischen einer Lagerung mit der dieses an einem Säschar oder an einem dem Säschar zugeordneten Halter montiert werden kann und dem die Umfangsfläche bildenden Ring einen Hohlraum aufweist, welchem Hohlraum wiederum Speichen zugeordnet sein können. Dabei können die Speichen zusammen einen maximalen Mittelpunktswinkel von 45° oder 90° oder 135° einschließen.

Um zu vermeiden, dass sich der Hohlraum mit Erde festsetzt oder das sich Steine in diesem verklemmen, kann zudem vorgesehen sein, dass dieser eine einteilige oder mehrteilige Abdeckung aufweist, so dass zwar der Hohlraum im Inneren des Tiefenführungsrads bzw. zwischen dem Ring und der Lagerung nach wie vor vorhanden ist, jedoch die nach außen hin offene bzw. die von der Sechscheibe abgewandte Seite weitgehend verschlossen bleibt. Die Abdeckung kann zudem einen kleineren Durchmesser als die Umfangsfläche des Ringes aufweisen und auch einen Abstand zur Außenkante bzw. einen Abstand zur Umfangsfläche des Ringes aufweisen. Durch eine derartige Ausführungsform der Abdeckung kann ggf. im Hohlraum vorhandene Erde wieder entsprechend aus diesem herausbefördert werden.

Durch nasse, klebrige Böden kann es zudem vorkommen, dass Erde an den Komponenten des Säschar, insbesondere an der Sechscheibe, aber auch an der Tiefenführungsrolle anhaftet. Auch dies wurde durch das Walkverhalten bekannter Tiefenführungsrollen noch weiter verschlechtert. Um dem entgegenzuwirken, wurden bislang sog. Abstreifer an den Säscharen angebaut, mittels derer die jeweiligen Komponenten abgeschabt wurden, wobei derartige Abstreifer mitunter sehr teuer und aufwendig sind, und mittels diesen ein Arbeitsergebnis mitunter nicht exakt genug gewährleistet werden kann. Dementgegen ist das erfindungsgemäße Säschar derartig ausgeführt, dass dieses in der Regel auf jegliche Abstreifer oder dergl. verzichten kann, wobei dies durch die Schwingungseigenschaften der Ringe und/oder durch deren konturierte Umfangsfläche erreicht wird.

Erfindungsgemäß ist zudem vorgesehen, dass der Ring neben der Tiefenführung aus als Abstreifer für die Sechscheibe eingesetzt werden kann. Was insbesondere durch einen formstabilen aber auch durch einen federnden, Schwingungen durchführenden Ring erreicht wird. Um den Ring hierbei auch als Abstreifer einsetzen zu können, ist vorgesehen, dass dieser mit dessen Innenkante an der Oberfläche der Sechscheibe anliegen kann. In dieser Ausführungsform ist der Ring insbesondere aus Metall oder einen verschleißfesten Kunststoff gefertigt, wodurch zudem der Verschleiß dem der Ring durch die Abstreiffunktion unterliegt wesentlich verringert wird, was bislang bei aus Gummimaterial gefertigten Tiefenführungsräder nicht möglich war. Auch wird durch die federnden Eigenschaften des Rings ein Anhaften von Erde an diesem sowie am Säschar generell weitgehend unterbunden, wodurch keine Abstreifer benötigt werden und wodurch somit generell weniger Erde mittels des Säschar bewegt wird.

Zudem kann erfindungsgemäß vorgesehen sein, dass der Ring des Tiefenführungsrads zumindest abschnittweise und/oder punktuell an der Oberfläche der Sechscheibe anliegt, wodurch diese entsprechend durch den Ring abgeschabt wird, ohne hierfür separate Abstreifer zu benötigen. Dabei kann eine Anordnung des Anlagepunkts bzw. der Anlagefläche des Rings an der Sechscheibe derartig erfolgen, dass diese(r) unterhalb einer waagerechten durch den Mittelpunkt der Sechscheibe oder durch dessen Lagerung verlaufende Ebene und in Fahrtrichtung betrachtet vor dem Mittelpunkt bzw. der Lagerung der Sechscheibe liegt, wobei die Anlagefläche und/oder der Anlagepunkt auch zumindest annähernd auf dieser Ebene oder leicht oberhalb dieser Ebene liegen könnte. Durch eine derartige Anordnung kann die bewegte Erde nochmals verringert werden, da diese unmittelbar nach dem Heraustreten der Sechscheibe aus der Bodenoberfläche bereits abgeschabt wird.

Insbesondere kann das Tiefenführungsrad auch höhenverstellbar zur Sechscheibe angebracht sein, um somit die jeweilige Saattiefe zu definieren, wobei auch hierbei wiederum der Anlagepunkt und/oder die Anlagefläche des Rings an der Sechscheibe derartig definiert ist, dass diese(r) unterhalb einer waagerechten durch den Mittelpunkt der Sechscheibe oder durch dessen Lagerung verlaufende Ebene und in Fahrtrichtung betrachtet vor dem Mittelpunkt bzw. der Lagerung der Sechscheibe liegt. Dabei könnte die Anlagefläche und/oder der Anlagepunkt auch zumindest annähernd auf dieser Ebene oder leicht oberhalb dieser Ebene liegen, je nachdem welche Tiefeneinstellung das Säschar aufweist.

Um dies noch weiter zu verbessern, weisen die Sechscheibe und das Tiefenführungsrad unterschiedliche Drehzahlen auf, was bspw. durch verschiedene Durchmesser erreicht werden kann. Auch könnten hierfür andere Hilfsmittel eingesetzt werden. Insbesondere weist das Tiefenführungsrad eine größere Drehzahl als die Sechscheibe auf, was bspw. erreicht wird, indem die Sechscheibe einen Durchmesser von 200 mm bis 500 mm sowie das Tiefenführungsrad einen Durchmesser von 100 mm bis 400 mm aufweist. Da beide durch den gemeinsamen Anbau an der landwirtschaftlichen Maschine jeweils die gleiche Fahrgeschwindigkeit besitzen, ergeben sich durch die verschiedenen Durchmesser jeweils verschiedenen Drehzahlen. In einer bevorzugten Ausführungsvariante ist die Drehzahl des Tiefenführungsrads um zumindest 10 % oder 25 % oder 50 % größer oder doppelt so groß wie die Drehzahl der Sechscheibe.

Die Abstreiffunktion des Rings des Tiefenführungsrads an der Sechscheibe wird zudem verbessert, indem der Ring oder dessen Ringsegmente aus einem metallischen- oder formstabilen Kunststoff Material gefertigt ist bzw. sind. Auch können in einem Kunststoffmaterial, Metallelemente eingegossen sein, wobei auch wiederum die Metallelemente punktuell und/oder abschnittweise an der Sechscheibe anliegen können.

Um die Abstreiffunktion noch weiter zu verbessern, können der Ring des Tiefenführungsrads und die Sechscheibe in unterschiedlichen Winkeln zur Fahrtrichtung angeordnet sein. Dabei können auch nur die Sechscheibe oder der Ring des Tiefenführungsrads in einem Winkel angeordnet sein. Auch können das Tiefenführungsrad und/oder die Sechscheibe ebenso in einem Winkel oder in verschiedenen Winkel zu einer aufrechten in Fahrtrichtung verlaufenden Achse angeordnet sein, wodurch insbesondere ein punktuelles bzw. abschnittweises Anliegen des Rings an der Sechscheibe noch weiter präzisiert wird und somit zusätzlich die durch den Ring durchgeführte Abstreiffunktion noch verbessert wird.

Der mittels einer Verstellvorrichtung variabel veränderbare bzw. einstellbare Schardruck kann bspw. bei trockenen Bedingungen sehr groß definiert sein, und bspw. 100kg oder 200kg oder mehr betragen, wohingegen bei feuchten und klebrigen Bedingungen der Schardruck mittels der Verstellvorrichtung entsprechend kleiner gewählt wird und bspw. nur noch 50kg oder 100 kg betragen kann. Auch können am Ring bzw. am Tiefenführungsrad aber auch am Säschar Messeinrichtungen zur sensorischen Erfassung des jeweils aktuell am Säschar anliegenden Schardrucks angebaut sein.

Auch können in einer einfachen Ausführungsvariante an der landwirtschaftlichen Maschine Sensoren oder dergl. Messmittel angebracht sein, welche jeweils eine Bodenstruktur vor und nach der Überfahrt der Bodenoberfläche erfassen und jeweils auf Basis dieser erfassten Werte der Schardruck des Säschar bzw. der Säschare entsprechend variabel angepasst wird. In einer weiteren Ausführungsvariante können derartige Sensoren bzw. Messmittel auch an einer Mehrzahl von Säscharen oder aber auch an jedem Säschar angebaut sein. Auch kann auf Basis dieser erfassten Werte die Schwingungsamplitude des Rings entsprechend variabel eingestellt werden.

Der Ring kann zudem aus einem Material gefertigt sein, welches abweisend gegenüber Erde ist, bzw. derartig gefertigt sein, dass die Gefahr des Anhaftens von Erde noch weiter minimiert wird. Insbesondere können hierfür metallische Werkstoffe, aber auch Metalle und/oder Kunststoffe verwendet werden, die gegossen wurden. Aber auch Verbundwerkstoffe oder dergl. wären denkbar, bzw. verwendbar. Insbesondere kommen Materialien zum Einsatz, welche eine geringe Oberflächenrauheit aufweisen.

Um zudem noch bessere Bodenstrukturen zu erreichen, können die Druckrollen bzw. kann die Druckrolle zudem ebenfalls eine konturierte Umfangsfläche aufweisen. Dabei können bspw. fingerartig gebogene Rundstähle oder dergl. angebracht sein. Auch können sog. Fingerdruckrollen oder Stacheldruckrollen oder Zahndruckrollen oder Prismendruckrollen verwendet werden. Auch können verschiedene Druckrollen jeweils gemeinsam kombiniert werden.

Der Ring kann bspw. derartig ausgeführt sein, wie er in der deutschen Patentanmeldung mit dem Aktenzeichen DE 10 2017 105 403.0 offenbart wurde. Auch kann der Ring ausgeführt sein, wie er durch die europäische Patentanmeldung mit der Veröffentlichungsnummer EP 2 868 178 A1 offenbart wurde. Auch denkbar wäre ein Ring, der der Ausführung gemäß der europäischen Patentanmeldung EP 2 386 196 A1 entspricht. Auch denkbar wäre ein Ring wie er gemäß der europäischen Patenschrift EP 2 433 481 B1 abgebildet ist. Zudem denkbar wäre ein Ring, der gemäß der europäischen Anmeldung EP 1 038 423 A1 offenbart ist. Auch denkbar wäre eine Ausführung des Ringes gemäß der europäischen Patentanmeldung EP 2 502 476 A1. Auch kann ein Ring derartig ausgeführt sein, wie er durch die deutsche Patentanmeldung mit der Veröffentlichungsnummer DE 10 2014 111 295 bekannt wurde. Darüber hinaus wären auch Ringe gemäß der Offenbarung der EP 2 635 102 A1 oder gemäß der Offenbarung der EP 2 281 424 A1 denkbar.

In einer weiteren Ausführungsvariante kann zudem vorgesehen sein, dass neben einer Sechscheibe oder neben einem Furchenwerkzeug jeweils zwei oder mehr Tiefenführungsräder angeordnet sind. Auch können die Ringe bzw. die sich aus Ringsegmenten zusammengesetzten Ringe jeweils radial zueinander verdreht angebracht sein. Auch kann sich ein Tiefenführungsrad bspw. aus einem formstabilen an dessen Umfangsfläche konturierten Ring und aus einem biegsamen durch einen mittels einer Verstellvorrichtung variabel veränderbaren Schardruck hervorgerufene Schwingungen durchführenden Ring gebildet werden. Auch können zwei drei oder mehr Ringe jeweils ein Tiefenführungsrad bilden. Auch kann vorgesehen sein, dass bei einem Säschar mit zwei Sechscheiben dennoch nur ein Tiefenführungsrad angebracht ist.

Die Scharhalterung kann sowohl einteilig als auch mehrteilig ausgebildet sein, d.h. wenn im vorliegenden Dokument der Begriff Scharhalterung angewendet wird, so umfasst dieses auch eine mehrteilige Ausführungsform dieser, insbesondere auch derartige Ausführungsformen an denen zur Montage der Sechscheibe und/oder des Tiefenführungsrads und/oder des Saatrohrs und/oder der Druckrolle und/oder von anderen dem Säschar zugeordneten Komponenten noch weitere Halteelemente, Befestigungselemente oder dergl. Montageelemente angebracht werden.

Es sei abschließend noch angemerkt, dass eine Vielzahl von vorab beschriebenen Säscharen mit erfindungsgemäßen Tiefenführungsräder an einer landwirtschaftlichen Maschine zum Verteilen und Ausbringen von landwirtschaftlichen Verteilgütern angebracht bzw. angebaut sein können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Hierbei zeigen:
- Fig. 1A: eine Seitenansicht einer Anordnung eines Tiefenführungsrads und einer Sechscheibe mit angedeutetem Walkverhalten wie es durch den Stand der Technik bekannt ist;
- Fig. 1B: eine Vorderansicht eines als Doppelscheibenschar ausgebildeten Säschar mit jeweils links und rechts angeordneten und walkenden Tiefenführungsräder;
- Fig. 2A: eine Seitenansicht einer Anordnung eines Tiefenführungsrads und einer Sechscheibe, wobei das Tiefenführungsrad erfindungsgemäß kein Walkverhalten aufweist und einen als biegsamen Schwingungen durchführenden die Umfangsfläche bildender Ring aufweist;
- Fig. 2B: eine Vorderansicht eines als Doppelscheibenschar ausgebildeten Säschar mit jeweils links und rechts angeordneten nicht walkenden Tiefenführungsräder;
- Fig. 3: eine Perspektivansicht eines als Doppelscheibenschar ausgebildeten Säschar, wobei der einen Hohlraum und das Tiefenführungsrad eine seitliche Abdeckung aufweist;
- Fig. 4: eine Perspektivansicht eines als Einscheibenschar ausgebildeten Säschar, wobei der einen Hohlraum und das Tiefenführungsrad bildende Ring eine seitliche Abdeckung aufweist;
- Fig. 5: eine Draufsicht eines Einscheibenschar gemäß der Fig. 4; und
- Fig. 6: eine Perspektivansicht eines als Einscheibenschar ausgebildeten Säschar wobei das einen Hohlraum aufweisende Tiefenführungsrad keine seitliche Abdeckung aufweist.

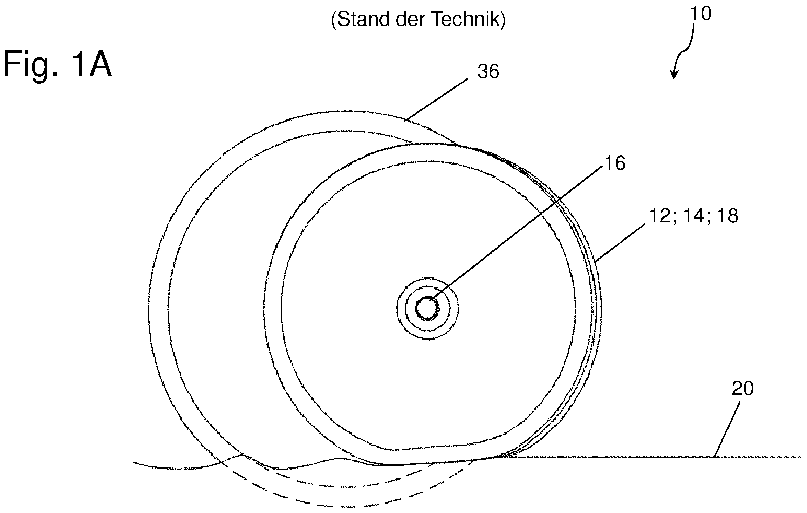

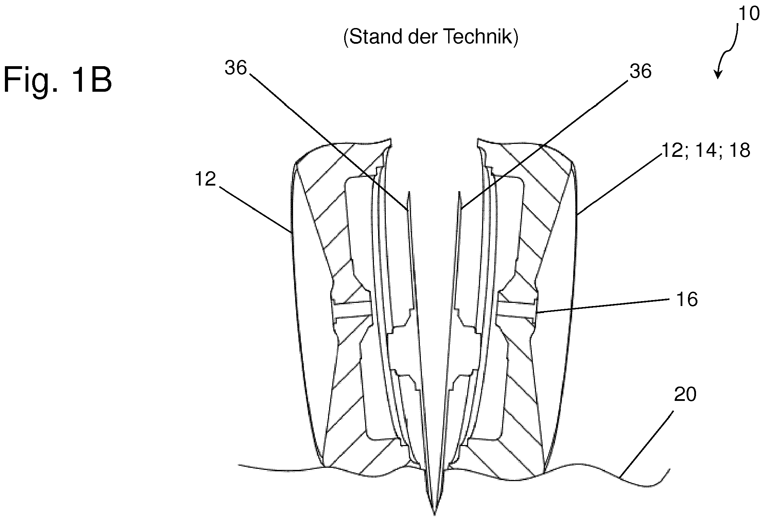

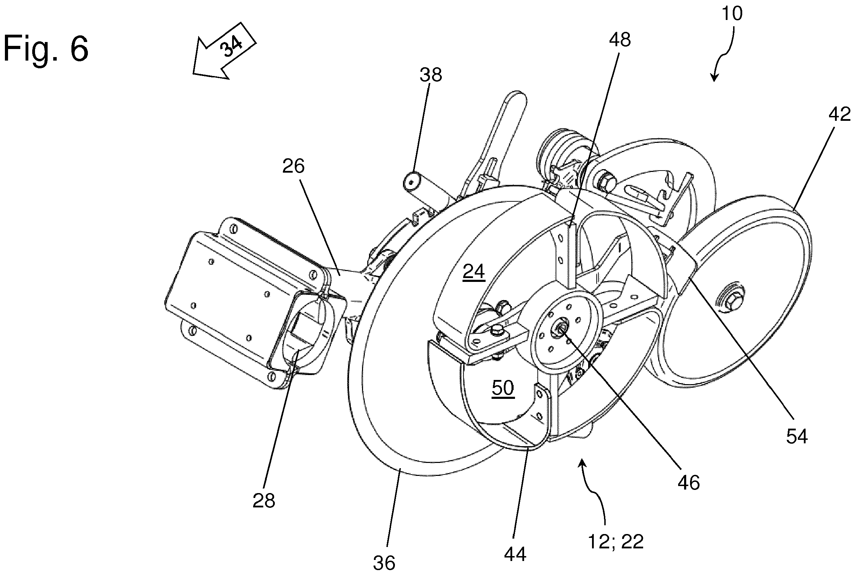

Für gleiche oder gleich wirkende Elemente der Erfindung werden in den Figuren 1 bis 6 jeweils identische Bezugszeichen verwendet. Ferner werden der verbesserten Übersicht halber zum Teil nur solche Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Säschar ausgestaltet sein kann und stellen keine abschließende Begrenzung dar.

Gemäß der Figuren 1A und 1B werden jeweils die Nachteile der aus dem Stand der Technik bekannt gewordenen an einem Säschar 10 angeordneten Tiefenführungsrädern 12 verdeutlicht. Die hierbei gezeigten Tiefenführungsräder 12 sind jeweils als walkendes Gummirad 14 oder Kunststoffrad ausgeführt, bestehend aus einer Aufnahme 16 zur Montage dieser sowie einem bspw. aus Gummi oder walkenden Kunststoff gebildeten Laufkranz 18. Durch die walkenden Eigenschaften bzw. durch das Walkverhalten dieser Gummiräder 14 oder dieser Kunststoffräder erfolgt jeweils eine großflächige Anpassung dieser an einer Bodenoberfläche 20, bzw. diese weisen durch das Walkverhalten jeweils eine große Auflagefläche auf, wobei die Bodenoberfläche 20 somit jeweils großflächig überfahren wird und wodurch somit jeweils keine feinkörnige Bodenstruktur hinterlassen wird. Durch die somit entstehende glatte Bodenoberfläche 20 besteht bei Regen die Gefahr der Verschlämmung.

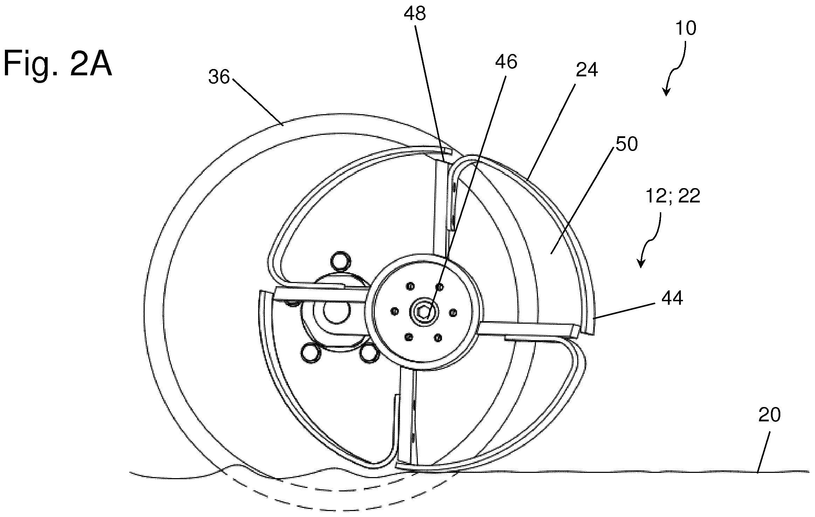

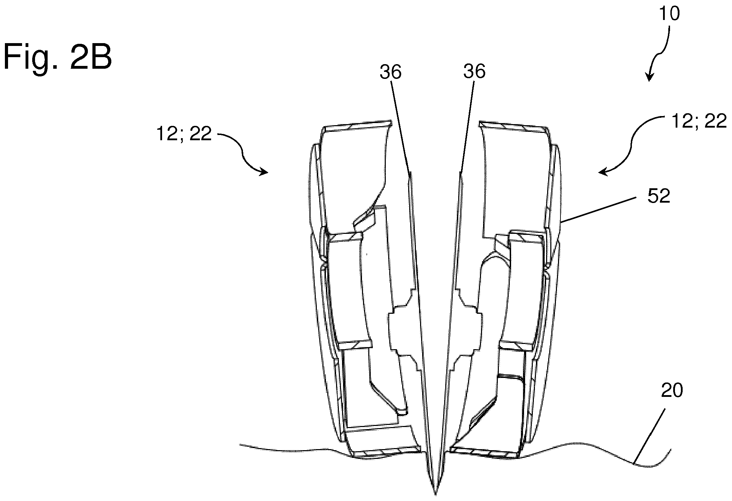

Dementgegen zeigen die Figuren 2 bis 6 jeweils Tiefenführungsräder 12 bzw. Tiefenführungsräder 12 aufweisende Säschare 10, welche derartig ausgebildet sind, dass diese durch einen mittels einer Verstellvorrichtung variabel veränderbaren Schardruck hervorgerufenen Schwingungen durchführenden Ring 22 gebildet werden bzw. dass diese jeweils eine Umfangsfläche 24 aufweisen, welche durch einen Ring 22 gebildet wird. Auch wäre es denkbar, dass die Umfangsfläche 24 des Tiefenführungsrads 12 durch einen formstabilen konturierten Ring 22 gebildet wird. Der Ring 22 ist jeweils derartig ausgebildet, dass dieser eine feinkrümelige Bodenstruktur bzw. Bodenoberfläche 20 erzeugt (vergl. Fig. 1A mit Fig. 2A), welche somit die Gefahr der Verschlämmung verringert. Der Ring 22 weist jeweils eine Breite auf, welche größer ist als dessen Höhe, wobei die Höhe jeweils durch die Materialstärke definiert wird, jedoch auch durch die konturierte Form bzw. Umfangsfläche 24 definiert sein kann.

Das Säschar 10 ist mittels einer Scharhalterung 26 in aufrechter Ebene bewegbar an einer nicht dargestellten Scharschiene einer nicht dargestellten Rahmenkonstruktion einer landwirtschaftlichen Maschine zur Verteilung von landwirtschaftlichen Verteilgütern wie Saatgut und/oder Dünger angebaut. Die Höhenbeweglichkeit wird durch eine Schwenkbarkeit der Scharhalterung 26 erreicht wird, wobei dies bspw. durch eine mittels Gummielementen ausgeführten Drehlagerung 28 oder mittels eines Parallelogramms 30 erfolgen kann. Auch wären hierbei noch andere Schwenklagerungen oder höhenbewegliche Lagerungen denkbar bzw. vorstellbar. Auch kann die Scharhalterung 26 derartig an der landwirtschaftlichen Maschine angebracht sein, dass eine auf das Säschar 10 wirkende Kraft, welche auch als Schardruck bezeichnet werden, kann mittels einer bekannten Verstellvorrichtung verändert werden kann, um somit eine Anpassung an die jeweiligen Bodenbedingungen zu erreichen. Bspw. könnte hierfür ein Linearantrieb 32 oder dergl. vorgesehen sein, wobei der Schardruck jeweils in Abhängigkeit der Bodenbedingungen vergrößert oder verringert wird. Dies kann sowohl automatisiert als auch manuell erfolgen.

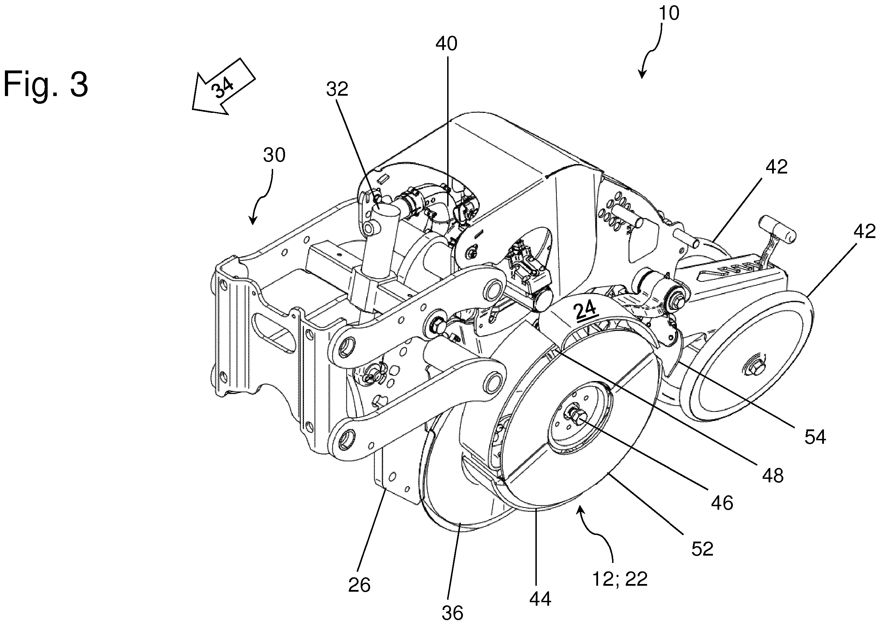

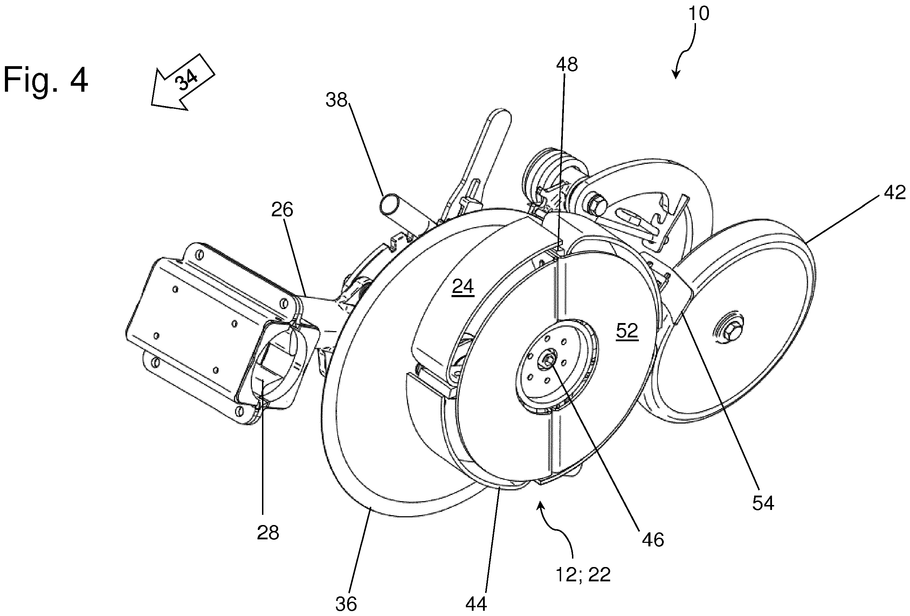

An der Scharhalterung 26 sind die das Säschar bildenden Komponenten angebaut. Zur Erzeugung einer Saatfurche, in welche die jeweiligen Verteilgüter abgelegt werden, ist an der Scharhalterung als furchenziehendes Werkzeug zumindest eine (Fig. 4 bis 6) oder zwei (Fig. 3) in einem Winkel zur Fahrrichtung 34 angestellte und drehbar gelagerte Sechscheibe(n) 36 angebracht, wobei bei einer Ausführung mit zwei derartigen Sechscheiben 36 diese jeweils spiegelbildlich bzw. in entgegengesetzter Ausrichtung zueinander angeordnet sind. Das Säschar 10 ist somit in Abhängigkeit der Anzahl an Sechscheiben 36 als Einscheibenschar (Fig. 4 bis 6) oder als Doppelscheibenschar (Fig. 3) ausgeführt. Zudem kann bzw. können die eine oder mehreren Sechscheiben ebenso in einem Winkel zu einer Aufrechten (Fig. 1B und 2B und 5) angeordnet sein.

Darüber hinaus umfasst das Säschar 10 ein Saatrohr 38 zum Transport bzw. zur Führung des Verteilguts aus einer Dosiervorrichtung 40 zur mittels der furchenziehenden Werkzeuge erzeugten Saatfurche, wobei das Saatrohr 38 hierbei zwischen den zwei bzw. neben der einen Sechscheibe 36 angeordnet ist. Die Dosiervorrichtung 40 kann am Säschar angebracht sein (Fig. 3) oder beanstandet von diesem, sowie als Einzelkorndosiervorrichtung, aber auch als volumetrische Dosiervorrichtung bzw. als volumetrisch arbeitende Dosiervorrichtung oder dergl. ausgeführt sein. Um die Saatfurche nach Ablage des Verteilguts wieder zu schließen sowie das Saatgut für einen guten Bodenschluss anzudrücken, kann das Säschar 10 wiederum zumindest eine oder mehrere Druckrollen 42 umfassen, welche Druckrollen 42 zudem in einem Winkel zu einer aufrecht verlaufenden Achse sowie in einem Winkel zur Fahrtrichtung 34 angeordnet sein können. Dabei sind die Druckrollen 42 in den Ausführungsbeispielen jeweils als Gummirollen mit einer Felge und einem Laufkranz aus Gummimaterial ausgebildet. Es wären jedoch auch Fingerdruckrollen oder Stacheldruckrollen oder Zahndruckrollen oder Prismendruckrollen denkbar. Auch können verschiedene Druckrollen 42 jeweils gemeinsam kombiniert werden.

Zur Tiefenführung bzw. zur Einstellung der Tiefe der Saatfurche ist dem Säschar 10 bzw. ist dem wenigstens einen furchenziehenden Werkzeug wiederum zumindest ein Tiefenführungsrad 12 zugeordnet. Insbesondere ist dieses Tiefenführungsrad 12 wiederum neben der einen Sechscheibe 36 oder jeweils neben den zwei Sechscheiben 36 angeordnet, vorzugsweise auf der abgewandten Seite des Saatrohrs 38.

Insbesondere ist der Ring 22 gegenüber den aus dem Stand der Technik bekannten Tiefenführungsrädern 12 nicht walkend ausgebildet. Das Tiefenführungsrad 12 bzw. die bei einem Doppelscheibenschar evtl. vorhandenen zwei Tiefenführungsräder 12 sind vorteilhafterweise nicht als walkendes Gummirad 14, bestehend aus Felge bzw. Aufnahme und walkenden Gummiring bzw. Laufkranz 18 ausgebildet oder als einteiliges oder mehrteiliges walkendes Kunststoffrad, sondern mit einem formstabiler an dessen Umfangsfläche 24 konturierten Ring 22 und/oder mit einem als biegsamer durch einen mittels einer Verstellvorrichtung variabel veränderbaren Schardruck hervorgerufene Schwingungen durchführenden Ring 22 aus Eisen, Stahl, Leichtmetall oder Kunststoff ausgefü hrt.

Zudem wird eine feinkrümelige Bodenstruktur durch einen erfindungsgemäßen Ring 22 dahingehend erreicht, dass dieser zwar bspw. durch einen auf das Säschar 10 bzw. den Ring 22 wirkenden Schardruck entsprechend verformt wird (vergl. Fig. 2A), d.h. sich entsprechend einer Größe einer variabel einstellbaren Kraft sich verbiegen kann, dieser jedoch dennoch nur eine geringe Auflagefläche auf der Bodenoberfläche 20 aufweist. Durch diese Biegsamkeit entstehen insbesondere Schwingungen und Vibrationen durch welche jeweils eine feinkrümelige Bodenstruktur entsteht. Zudem kann an den Ringen 22 durch die Schwingungen sich Erde nur in geringem Umfang anhaften, wodurch mittels des erfindungsgemäßen Rings 22 wiederum der Selbstreinigungseffekt des Säschar 10 stark verbessert wird und zudem für das Tiefenführungsrad 12 keinerlei Abstreifer oder Reinigungselemente benötigt werden, wodurch ein Einsatz des Säschar 10 auch bei feuchten, klebrigen Bodenbedingungen ermöglicht wird.

Neben einem entsprechend biegsam ausgeführten Ring 22 wäre es auch denkbar, einen formstabilen nicht walkenden Ring 22 zu verwenden, welcher jedoch eine entsprechend konturierte oder perforierte Umfangsfläche 24 aufweist, mittels derer wiederum eine feinkrümelige Bodenoberfläche 20 erzeugt wird. Hierbei können bspw. Kunststoffringe oder Metallringe oder dergl. Ringe 22 eingesetzt werden. Derartige Ringe 22 zeichnen sich mitunter durch gute Eigenantriebseigenschaften aus, wodurch diese auch bei feuchten, klebrigen Bodenbedingungen einsetzbar sind.

Der die Umfangsfläche 24 des Tiefenführungsrads 12 bildende Ring 22 kann aus zwei, drei oder mehr Ringsegmente 44 gebildet sein. Gemäß den Ausführungsbeispielen bilden jedoch vier Ringsegmente 44 die Umfangsfläche 24 des Tiefenführungsrads 12. Die Ringsegmente 44 sind hierbei sternförmig an einer Lagerung 46 des Tiefenführungsrads 12 angeordnet. Ebenso ist die Umfangsfläche 24 weitgehend kontinuierlich und wird lediglich durch die frei beweglichen Enden der Ringsegmente 44 unterbrochen, wobei sich durch die Einwirkung eines Schardrucks wieder eine kontinuierliche Umfangsfläche 24 ausbildet. Insbesondere sind Anschlagelemente 48 derartig angebracht, dass sich jeweils ein Ringsegment 44 mit dessen frei beweglichen Ende an diesem abstützen kann, wodurch die kreisförmige Umfangsfläche 24 entsteht. So ist vorgesehen, dass jeweils ein Ringsegment 44 an einem Anschlagelement 48 montiert wird sowie dass sich jeweils ein gegenüberliegendes Anschlagelement 48 an diesem abstützt. Die Anschlagelemente 48 dienen zudem als Speichen bzw. Stege des Tiefenführungsrads.

Die Ringsegmente 44 können hierbei zudem aus einem Metallwerkstoff oder Stahl oder Kunststoffwerkstoff oder dergl. nicht walkenden Material gefertigt sein. Zudem sind die Ringsegmente 44 in Richtung eines Endbereiches nicht befestigt, sondern frei beweglich, wodurch wiederum die durch die somit entstehenden Vibrationen und Schwingungen erzeugte feinkrümelige Bodenoberfläche 20 verbessert wird.

Die jeweilige durch den Ring 22 bzw. die Ringsegmente 44 hervorgerufene Schwingungsamplitude kann durch ein Anschlagelement 48 begrenzt sein. Auch kann dieses Anschlagelement 48 in dessen Höhe verstellbar ausgeführt sein, so dass wiederum die Schwingungsamplitude entsprechend der vorhandenen Ackerfläche bzw. Bodenstruktur angepasst werden kann, wobei gemäß den Ausführungsbeispielen das Anschlagelement 48 jeweils dem nicht befestigten freien Ende der Ringsegmente 44 zugeordnet ist, und wobei an dem Anschlagelement 48 jeweils ein Ringsegment 44 montiert wird. Gemäß der Ausführungsbeispiele ist das Anschlagelement 48 jeweils derartig ausgeführt, dass die Ringe 22 durch eine durch den Schardruck hervorgerufene Verformung eine kreisförmige Umfangsfläche 24 aufweisen.

Um zudem ein möglichst kompakt bauendes Säschar 10 zu schaffen, sowie um die durch das Säschar 10 überfahrende Bodenfläche 20 noch weiter zu verringern, weisen die Ringe 22 eine Breite auf die größer oder gleich 40 mm ist und die maximal 120 mm ist. Dies wird insbesondere durch die nicht walkenden Eigenschaften der Ringe 22 erreicht, da Tiefenführungsräder 12, welche bspw. aus Gummi gefertigt sind, durch die walkenden Eigenschaften eine große Breite aufweisen müssen, um somit eine ausreichende Tiefenführung zu erreichen.

Zudem ist das Tiefenführungsrad 12 so aufgebaut, dass zwischen der Lageranordnung bzw. der Lagerung 46 oder der Felge und dem die Umfangsfläche 24 bildenden Ring 22 ein Hohlraum 50 vorhanden ist. Durch diesen Hohlraum 50 kann somit ein zusätzlicher Zerkleinerungseffekt entstehen, wodurch zusätzlich feinkrümelige Erde erzeugt wird. Diesen Hohlraum 50 können zudem zur Befestigung der Ringsegmente 44 oder entsprechend der Ausgestaltungsform der Ringsegmente 44 Stege zugeordnet sein, welche somit Speichen bilden, welche wiederum Erde entsprechend zerkleinern können.

Um zu vermeiden, dass sich der Hohlraum 50 mit Erde festsetzt oder dass sich Steine in diesem verklemmen kann, zudem vorgesehen sein, dass dieser eine Abdeckung 52 in Form von bspw. zwei Abdeckblechen aufweist, so dass zwar der Hohlraum 50 nach wie vor vorhanden ist, jedoch die nach außen hin offene bzw. die von der Sechscheibe 36 abgewandte Seite weitgehend verschlossen bleibt. Die Abdeckung 52 hat einen kleineren Durchmesser als die Umfangsfläche 24 bzw. der Ring 22. Auch weist die Abdeckung 52 einen Abstand zur Außenkante des Ringes 22 auf bzw. ist die Abdeckung 52 beabstandet zur Umfangsfläche 24 angebracht. Neben einer gemäß dem Ausführungsbeispielen zwei geteilten Abdeckung 52 könnte diese auch einteilig oder mehrteilig ausgeführt sein, bspw. kann die Anzahl der Abdeckungen 52 bzw. der Abdeckbleche oder der Abdeckelemente auch der Anzahl an Ringsegmenten 44 entsprechen.

Durch nasse, klebrige Böden kann es zudem vorkommen, dass Erde an den Komponenten des Säschar 10 insbesondere an der Sechscheibe 36 aber auch am Tiefenführungsrad 12 anhaftet. Auch dies wurde durch die großen Auflageflächen der bekannten walkenden Tiefenführungsräder 12 noch weiter verschlechtert. Um dem entgegenzuwirken wurden bislang jeweils sog. Abstreifer an den Säscharen 10 angebaut, mittels derer die jeweiligen Komponenten abgeschabt wurden, wobei derartige Abstreifer mitunter sehr teuer und aufwendig sind, und mittels diesen ein Arbeitsergebnis mitunter nicht exakt genug gewährleistet werden kann. Zum Verständnis wurde in den Ausführungsbeispielen der Figuren 3 bis 6 jeweils ein derartiger Abstreifer 54 für die Tiefenführungsräder 12 abgebildet, wobei auf diesen durch das erfindungsgemäße Tiefenführungsrad 12 auch verzichtet werden kann, oder dieser auch bei extremen Bedingungen trotzdem eingebaut werden kann, wodurch das Säschar 10 bei noch extremeren Bedingungen eingesetzt werden kann als dies durch das erfindungsgemäße neue Säschar 10 ohnehin schon erreicht wird bzw. als dies bei aus dem Stand der Technik bekannt gewordener Säschare 10 überhaupt möglich war.

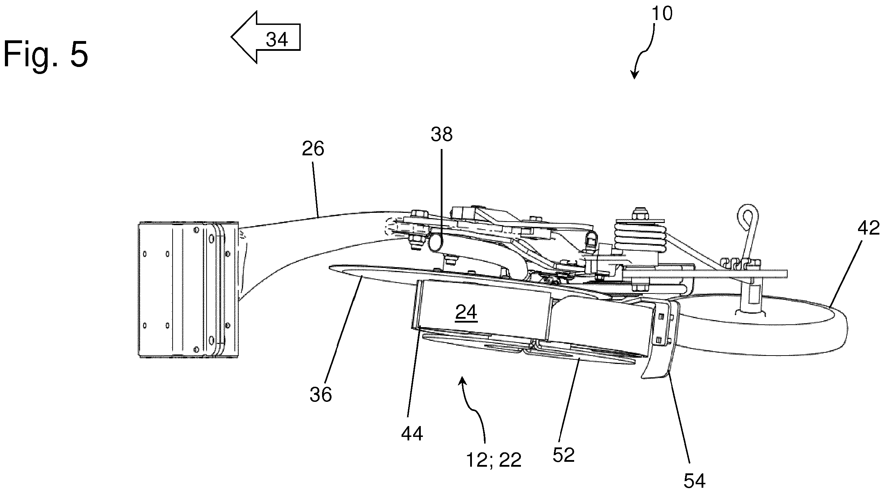

Dementgegen ist das Erfindungsgemäße Säschar 10 derartig ausgeführt dass dieses weitgehend auf alle Abstreifer 54 oder dergl. Verzichten kann, wobei dies durch die Schwingungseigenschaften der Ringe 22 und/oder durch deren konturierte Umfangsfläche 24 erreicht wird. Zudem ist erfindungsgemäß vorgesehen, dass der Ring 22 des Tiefenführungsrads 12 an der Oberfläche der Sechscheibe 36 anliegt (vergl. Fig. 5) und somit das Tiefenführungsrad 12 als Abstreifer der Sechscheibe 36 dient.

Auch könnte vorgesehen sein, dass der Ring 22 zumindest abschnittweise und/oder punktuell an der Oberfläche der Sechscheibe 36 anliegt, wodurch diese entsprechend durch den Ring 22 abgeschabt wird bzw. wodurch der Ring 22 auch somit als Abstreifer 54 dient, ohne hierfür separate Teile zu benötigen. Dabei kann hierbei eine Anordnung des Anlagepunkts und/oder der Anlagefläche des Rings 22 an der Sechscheibe 36 unterhalb einer waagerechten durch den Mittelpunkt der Sechscheibe 36 oder dessen Lagerung 46 verlaufenden Ebene und in Fahrtrichtung 34 betrachtet vor dem Mittelpunkt der Sechscheibe 36 oder dessen Lagerung 46 liegen, wobei die Anlagefläche und/oder der Anlagepunkt auch zumindest annähernd auf dieser Ebene oder leicht oberhalb dieser Ebene liegen könnte. Durch eine derartige Anordnung kann die durch das Säschar 10 bewegte Erde nochmals verringert werden, da diese unmittelbar nach dem heraustreten der Sechscheibe 36 aus der Bodenoberfläche 20 bereits abgeschabt wird.

Insbesondere kann das Tiefenführungsrad 12 auch höhenverstellbar zur Sechscheibe 36 angebracht sein, um somit die jeweilige Saattiefe zu definieren, wobei auch hierbei wiederum die Anlagefläche und/oder der Anlagepunkt des Rings 22 an der Sechscheibe derartig 36 definiert ist, dass dieser unterhalb einer waagerechten durch den Mittelpunkt der Sechscheibe 36 oder dessen Lagerung 46 verlaufenden Ebene und in Fahrtrichtung 34 betrachtet vor dem Mittelpunkt der Sechscheibe 36 oder dessen Lagerung 46 liegt. Dabei könnten die Anlagefläche und/oder der Anlagepunkt auch zumindest annähernd auf dieser Ebene oder leicht oberhalb dieser Ebene liegen, je nachdem welche Tiefeneinstellung das Säschar 10 aufweist.

Um dies noch weiter zu verbessern, weisen die Sechscheibe 36 und das Tiefenführungsrad 12 unterschiedliche Drehzahlen auf, was bspw. durch verschiedene Durchmesser dieser erreicht werden kann. Insbesondere weist das Tiefenführungsrad 12 eine größere Drehzahl als die Sechscheibe 36 auf, was bspw. erreicht wird, indem die Sechscheibe 36 einen Durchmesser von 200 mm bis 500 mm sowie das Tiefenführungsrad 12 einen Durchmesser von 100 mm bis 400 mm aufweist. Da beide jeweils die gleiche Fahrgeschwindigkeit besitzen, ergeben sich durch die verschiedenen Durchmesser jeweils verschiedenen Drehzahlen. In einer bevorzugten Ausführungsvariante, ist die Drehzahl des Tiefenführungsrads 12 um zumindest 10 % oder 25 % oder 50 % größer oder doppelt so groß wie die Drehzahl der Sechscheibe 36.

Um die Abstreiffunktion noch weiter zu verbessern, können der Ring 22 des Tiefenführungsrads 12 und die Sechscheibe 36 in unterschiedlichen Winkeln zur Fahrtrichtung 34 angebracht sein, wodurch insbesondere ein punktuelles bzw. abschnittweises Anliegen des Rings 22 an der Sechscheibe 36 noch weiter präzisiert wird und somit zusätzlich die durch den Ring 22 durchgeführte Abstreiffunktion noch verbessert wird.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Säschar
- 12: Tiefenführungsrad
- 14: Gummirad
- 16: Aufnahme
- 18: Laufkranz
- 20: Bodenoberfläche
- 22: Ring
- 24: Umfangsfläche
- 26: Scharhalterung
- 28: Drehlagerung
- 30: Parallelogramm
- 32: Linearantrieb
- 34: Fahrtrichtung
- 36: Sechscheibe
- 38: Saatrohr
- 40: Dosiervorrichtung
- 42: Druckrolle
- 44: Ringsegment
- 46: Lagerung
- 48: Anschlagelement
- 50: Hohlraum
- 52: Abdeckung
- 54: Abstreifer

## Patentansprüche

1. Säschar (10) mit einer Scharhalterung (26), an der zumindest eine drehbar gelagerte Sechscheibe (36) und/oder ein Furchenwerkzeug angebracht ist, und an welcher zumindest ein ebenso drehbar gelagertes und neben der wenigstens einen Sechscheibe (36) angeordnetes Tiefenführungsrad (12) angebracht ist, wobei neben oder hinter der wenigstens einen Sechscheibe (36) angebracht oder dem Säschar (10) räumlich zugeordnet, zumindest ein Saatrohr zur Führung von landwirtschaftlichen Verteilgut in Richtung zu einer mittels der wenigstens einen Sechscheibe (36) und/oder mittels eines Furchenwerkzeugs erzeugten Saatfurche vorhanden ist, wobei das Tiefenführungsrad (12) einen umfänglichen und/oder einen eine Umfangsfläche (24) aufweisenden Ring (22) umfasst, dessen Breite größer ist alles dessen Höhe, **dadurch gekennzeichnet,**
**dass** sich der Ring (22) aus zumindest zwei, drei oder mehr Ringsegmenten (44) zusammensetzt.

2. Säschar nach Anspruch 1, **dadurch gekennzeichnet, dass** der Ring (22) als federnder, Schwingungen durchführender Ring (22) gebildet ist.

3. Säschar nach Anspruch 2, **dadurch gekennzeichnet, dass** die Schwingungen mittels eines mit einer Verstellvorrichtung variabel veränderbaren auf das Säschar (10) ausgeübten Schardrucks hervorrufbar sind.

4. Säschar nach Anspruch 1, **dadurch gekennzeichnet, dass** der Ring (22) als formstabiler eine U-förmige oder T-förmige oder V-förmige oder W-förmige oder quer zur Fahrtrichtung (34) geneigte Umfangsfläche (24) aufweisender Ring (22) ausgebildet ist.

5. Säschar nach zumindest einem der vorhergehenden Ansprüche, **dadurch gekennzeichnet, dass** der Ring (22) eine zumindest abschnittweise konturierte Umfangsfläche (24) oder eine plane Umfangsfläche (24) aufweist.

6. Säschar nach zumindest einem der vorhergehenden Ansprüche, **dadurch gekennzeichnet, dass** die Höhe des Rings (22) durch dessen Materialstärke oder durch die Kontur der Umfangsfläche (24) definiert ist.

7. Säschar nach einem der Ansprüche 1 bis 6, **dadurch gekennzeichnet, dass** die Ringsegmente (44) einen freibeweglichen Endbereich aufweisen.

8. Säschar nach einem der Ansprüche 1 bis 6, **dadurch gekennzeichnet, dass** die Ringsegmente (44) mit deren Endbereichen an einem die Lagerung (46) aufweisenden Montageelement montiert sind oder dass diese mit deren Endbereichen an einem an der Lagerung (46) anschließenden Steg montiert sind.

9. Säschar nach einem der Ansprüche 1 bis 6, **dadurch gekennzeichnet, dass** die Ringe (22) bogenförmig ausgebildet sind und einen bogenförmigen Bereich einschließen, der größer oder gleich 45° oder größer oder gleich 90° oder größer oder gleich 180° oder 360° ist.

10. Säschar nach zumindest einem der vorhergehenden Ansprüche, **dadurch gekennzeichnet, dass** der Ring (22) und/oder die Ringsegmente (44) aus Metall oder aus Kunststoff oder einer Kombination dieser Werkstoffe gefertigt sind und/oder dass diese aus einem federnde Eigenschaften aufweisenden Material gefertigt sind.

11. Säschar nach zumindest einem der Ansprüche 2 bis 10, **dadurch gekennzeichnet, dass** die durch den Schardruck hervorgerufenen Schwingungsamplituden des Rings (22) oder der Ringsegmente (44) mittels eines Anschlagelements (48) begrenzbar sind.

12. Säschar nach zumindest einem der vorhergehenden Ansprüche, **dadurch gekennzeichnet, dass** der Ring (22) eine Breite aufweist, welche größer oder gleich 40 mm ist und maximal 120 mm beträgt.

13. Säschar nach zumindest einem der vorhergehenden Ansprüche, **dadurch gekennzeichnet, dass** das Tiefenführungsrad (12) zwischen einer Lagerung (46) und dem Ring (22) einen Hohlraum (50) ausbildet, welchem Hohlraum (50) durch Ringsegmente (44) oder durch Stege gebildete Speichen zugeordnet sind.

14. Säschar nach zumindest einem der vorhergehenden Ansprüche, **dadurch gekennzeichnet, dass** dem Tiefenführungsrad (12) zumindest auf der der Sechscheibe (36) abgewandten Seite eine einteilige oder mehrteilige Abdeckung (52) zugeordnet ist.

15. Säschar nach Anspruch14, **dadurch gekennzeichnet, dass** die Abdeckung (52) einen kleineren Durchmesser als der Ring (22) aufweist und/oder dass die Abdeckung (52) beabstandet zur Umfangsfläche (24) des Rings (22) angeordnet ist.

16. Säschar nach zumindest einem der vorhergehenden Ansprüche, **dadurch gekennzeichnet, dass** der Ring (22) an der Oberfläche der Sechscheibe (36) anliegt.

17. Säschar nach zumindest einem der vorhergehenden Ansprüche, **dadurch gekennzeichnet, dass** der Ring (22) zumindest punktuell und/oder abschnittweise an der Oberfläche einer Sechscheibe (36) anliegt.

18. Schar nach Anspruch 17, **dadurch gekennzeichnet, dass** die Anlagefläche und/oder der Anlagepunkt des Rings (22) an der Sechscheibe (36) in Fahrtrichtung (34) vor dem Mittelpunkt der Lagerung (46) der Sechscheibe (36) liegt.

19. Säschar nach Anspruch 17, **dadurch gekennzeichnet, dass** die Anlagefläche und/oder der Anlagepunkt des Rings (22) an der Sechscheibe (36) auf oder unterhalb einer waagerechten durch den Mittelpunkt der Lagerung (46) der Sechscheibe (36) verlaufenden Ebene liegt.

20. Säschar nach zumindest einem der vorhergehenden Ansprüche, **dadurch gekennzeichnet, dass** das Tiefenführungsrad (12) eine größere Drehzahl als die Sechscheibe (34) aufweist.

21. Säschar nach Anspruch 20, **dadurch gekennzeichnet, dass** die Drehzahl des Tiefenführungsrads (12) zumindest 10 % oder 25 % oder 50 % größer oder doppelt so groß wie die Drehzahl der Sechscheibe (36) ist.

22. Säschar nach zumindest einem der vorhergehenden Ansprüche, **dadurch gekennzeichnet, dass** die zumindest eine Sechscheibe (36) und/oder dass zumindest der Ring (22) in einem Winkel zur Fahrrichtung (34) angeordnet sind.

23. Säschar nach zum zumindest einem der vorhergehenden Ansprüche, **dadurch gekennzeichnet, dass** der Ring (22) und die Sechscheibe (36) in verschiedenen Winkel zur Fahrrichtung (34) angebracht sind.

24. Säschar nach zumindest einem der vorhergehenden Ansprüche, **dadurch gekennzeichnet, dass** sich ein Tiefenführungsrad (12) aus zwei Ringen (22) zusammensetzt.

25. Säschar nach zumindest einem der vorhergehenden Ansprüche, **dadurch gekennzeichnet, dass** dem Tiefenführungsrad (12) Messeinrichtungen zur sensorischen Erfassung des Schardrucks zugeordnet sind.

26. Säschar nach zumindest einem der vorhergehenden Ansprüche, **dadurch gekennzeichnet, dass** dieses als Einscheibenschar oder als Doppelscheibenschar oder als Kombination aus zumindest einer Sechscheibe und einem Furchenwerkzeug ausgebildet ist.

## Claims

1. A sowing coulter (10) with a coulter mount (26), to which at least one rotatably mounted coulter disc (36) and/or a furrowing tool is attached, and to which at least one depth control wheel (12) is attached, likewise rotatably and arranged next to the at least one coulter disc (36), wherein at least one seed tube is present, arranged next to or behind the at least one coulter disc (36) or spatially assigned to the sowing coulter (10) and provided to guide agricultural distribution goods toward a seed furrow produced by means of the at least one coulter disc (36) and/or by means of a furrowing tool, wherein the depth control wheel (12) comprises a circumferential ring (22) and/or a ring (22) having a circumferential surface (24), the width of which ring (22) is greater than its height, **characterised in that** the ring (22) is composed of at least two, three, or more ring segments (44).

2. The sowing coulter according to claim 1, **characterised in that** the ring (22) is formed as a resilient ring (22) that performs vibrations.

3. The sowing coulter according to claim 2, **characterised in that** the vibrations are causable by means of a coulter pressure exerted on the sowing coulter (10), which coulter pressure is variably changeable by means of an adjustment apparatus.

4. The sowing coulter according to claim 1, **characterised in that** the ring (22) is designed as a dimensionally stable ring (22) having a U-shaped or T-shaped or V-shaped or W-shaped circumferential surface (24) or a circumferential surface (24) inclined transversely to the driving direction (34).

5. The sowing coulter according to at least one of the previous claims, **characterised in that** the ring (22) has a circumferential surface (24) that is contoured at least in sections or a circumferential surface that is planar (24).

6. The sowing coulter according to at least one of the previous claims, **characterised in that** the height of the ring (22) is defined by its material thickness or by the contour of the circumferential surface (24).

7. The sowing coulter according to one of the claims 1 to 6, **characterised in that** the ring segments (44) have a freely movable end section.

8. The sowing coulter according to one of the claims 1 to 6, **characterised in that** the ring segments (44) are mounted with their end sections to a mounting element comprising the bearing (46) or **in that** the ring segments are mounted with their end sections to a ligament connecting to the bearing (46).

9. The sowing coulter according to one of the claims 1 to 6, **characterised in that** the rings (22) are designed to be arcuate and enclose an arcuate area greater than or equal to 45° or greater than or equal to 90° or greater than or equal to 180° or 360°.

10. The sowing coulter according to at least one of the previous claims, **characterised in that** the ring (22) and/or the ring segments (44) are made of metal or of plastic or of a combination of these materials and/or **in that** they are made of a material that has resilient properties.

11. The sowing coulter according to at least one of the claims 2 to 10, **characterised in that** the vibration amplitudes of the ring (22) or of the ring segments (44) caused by the coulter pressure are limitable by means of a stop element (48).

12. The sowing coulter according to at least one of the previous claims, **characterised in that** the ring (22) has a width that is greater than or equal to 40 mm and that is a maximum of 120 mm.

13. The sowing coulter according to at least one of the previous claims, **characterised in that** the depth control wheel (12) forms a hollow space (50) between a bearing (46) and the ring (22), to which hollow space (50) spokes are assigned which are formed by ring segments (44) or by ligaments.

14. The sowing coulter according to at least one of the previous claims, **characterised in that** a one-piece or multi-piece cover (52) is assigned to the depth control wheel (12) at least on the side facing away from the coulter disc (36).

15. The sowing coulter according to claim 14, **characterised in that** the cover (52) has a smaller diameter than the ring (22) and/or **in that** the cover (52) is arranged spaced apart from the circumferential surface (24) of the ring (22).

16. The sowing coulter according to at least one of the previous claims, **characterised in that** the ring (22) abuts on the surface of the coulter disc (36).

17. The sowing coulter according to at least one of the previous claims, **characterised in that** the ring (22) abuts at least at selective points and/or in sections on the surface of a coulter disc (36).

18. The coulter according to claim 17, **characterised in that** the contact surface and/or the contact point of the ring (22) lies on the coulter disc (36) in driving direction (34) in front of the centre of the bearing (46) of the coulter disc (36).

19. The sowing coulter according to claim 17, **characterised in that** the contact surface and/or the contact point of the ring (22) on the coulter disc (36) lies on or below a horizontal plane extending through the centre of the bearing (46) of the coulter disc (36).

20. The sowing coulter according to at least one of the previous claims, **characterised in that** the depth control wheel (12) has a greater rotation speed than the coulter disc (36).

21. The sowing coulter according to claim 20, **characterised in that** the rotation speed of the depth control wheel (12) is at least 10% or 25% or 50% greater or twice as great as the rotation speed of the coulter disc (36).

22. The sowing coulter according to at least one of the previous claims, **characterised in that** the at least one coulter disc (36) and/or **in that** at least the ring (22) are arranged at an angle to the driving direction (34).

23. The sowing coulter according to at least one of the previous claims, **characterised in that** the ring (22) and the coulter disc (36) are arranged at different angles to the driving direction (34).

24. The sowing coulter according to at least one of the previous claims, **characterised in that** a depth control wheel (12) is composed of two rings (22).

25. The sowing coulter according to at least one of the previous claims, **characterised in that** measuring devices for the sensor detection of the coulter pressure are assigned to the depth control wheel (12).

26. The sowing coulter according to at least one of the previous claims, **characterised in that** this sowing coulter is designed as a single-disc coulter or as a double-disc coulter or as a combination of at least one coulter disc and a furrowing tool.

## Revendications

1. Soc de semeur (10) doté d'un support de soc (26) sur lequel est agencé au moins un coutre circulaire (36) logé de manière rotative et/ou un outil de sillonnage, et sur lequel est agencée au moins une roue de guidage en profondeur (12) également disposée de manière rotative et agencée à côté dudit au moins un coutre circulaire (36), au moins un tube de semis étant présent pour guider le matériau d'épandage agricole en direction d'un sillon de semis généré au moyen dudit au moins un coutre circulaire (36) et/ou au moyen d'un outil de sillonnage étant agencée à côté ou derrière ledit au moins un coutre circulaire (36) ou associée dans l'espace au soc de semeur (10), la roue de guidage en profondeur (12) comprenant une bague (22) périphérique et/ou présentant une surface périphérique (24), dont la largeur est supérieure à sa hauteur, **caractérisé en ce**
**que** la bague (22) se compose d'au moins deux, trois ou plus segments de bague(44).

2. Soc de semeur selon la revendication 1, **caractérisé en ce que** la bague (22) est réalisée sous forme de bague élastique (22) réalisant des vibrations.

3. Soc de semeur selon la revendication 2, **caractérisé en ce que** les vibrations peuvent être provoquées au moyen d'une pression d'enterrage de soc variable exercée sur le soc de semeur (10) au moyen d'un dispositif de réglage.

4. Soc de semeur selon la revendication 1, **caractérisé en ce que** la bague (22) est réalisée sous forme de bague (22) de forme stable présentant une surface périphérique (24) en forme de U, de T, de V ou de W ou penchée obliquement par rapport au sens de marche (34).

5. Soc de semeur selon l'une quelconque des revendications précédentes, **caractérisé en ce que** la bague (22) présente une surface périphérique (24) aux contours au moins partiels ou une surface périphérique plane (24).

6. Soc de semeur selon l'une quelconque des revendications précédentes, **caractérisé en ce que** la hauteur de la bague (22) se définit par l'épaisseur de son matériau ou par le contour de la surface périphérique (24).

7. Soc de semeur selon l'une quelconque des revendications 1 à 6, **caractérisé en ce que** les segments de bague (44) présentent une zone d'extrémité à mouvement libre.

8. Soc de semeur selon l'une quelconque des revendications 1 à 6, **caractérisé en ce que** les segments de bague (44) sont montés par leurs zones d'extrémité sur un élément de montage présentant le palier (46), ou **en ce qu'**ils sont montés par leurs zones d'extrémité sur une entretoise se raccordant au palier (46).

9. Soc de semeur selon l'une quelconque des revendications 1 à 6, **caractérisé en ce que** les bagues (22) sont réalisées en forme d'arc et englobent une zone en forme d'arc supérieur ou égal à 45°, ou supérieur ou égal à 90°, ou supérieur ou égal à 180° ou 360°.

10. Soc de semeur selon au moins l'une quelconque des revendications précédentes, **caractérisé en ce que** la bague (22) et/ou les segments de bague (44) sont fabriqués en métal ou en matière plastique ou en une combinaison de ces deux matériaux, et/ou **en ce qu'**ils sont fabriqués en un matériau présentant des propriétés élastiques.

11. Soc de semeur selon au moins l'une quelconque des revendications 2 à 10, **caractérisé en ce que** les amplitudes de vibration de la bague (22) ou des segments de bague (44) provoquées par la pression d'enterrage du soc peuvent être limitées au moyen d'un élément de butée (48).

12. Soc de semeur selon au moins l'une quelconque des revendications précédentes, **caractérisé en ce que** la bague (22) présente une largeur qui est supérieure ou égale à 40 mm et de 120 mm au maximum.

13. Soc de semeur selon au moins l'une quelconque des revendications précédentes, **caractérisé en ce que** la roue de guidage en profondeur (12) réalise un espace creux (50) entre un palier (46) et la bague (22), des rayons formés par les segments de bague (44) ou par des entretoises étant associés audit espace creux (50).

14. Soc de semeur selon au moins l'une quelconque des revendications précédentes, **caractérisé en ce qu'**une couverture (52) en une ou plusieurs pièces est associée à la roue de guidage en profondeur (12) au moins sur le côté opposé au coutre circulaire (36).

15. Soc de semeur selon la revendication 14, **caractérisé en ce que** la couverture (52) présente un diamètre inférieur à celui de la bague (22) et/ou **en ce que** la couverture (52) est agencée à distance de la surface périphérique (24) de la bague (22).

16. Soc de semeur selon au moins l'une quelconque des revendications précédentes, **caractérisé en ce que** la bague (22) s'appuie sur la surface du coutre circulaire (36).

17. Soc de semeur selon au moins l'une quelconque des revendications précédentes, **caractérisé en ce que** la bague (22) s'appuie au moins de manière ponctuelle et/ou partiellement sur la surface d'un coutre circulaire (36).

18. Soc selon la revendication 17, **caractérisé en ce que** la surface d'appui et/ou le point d'appui de la bague (22) sur le coutre circulaire (36) se trouve, dans le sens de marche (34), avant le centre du palier (46) du coutre circulaire (36).

19. Soc de semeur selon la revendication 17, **caractérisé en ce que** la surface d'appui et/ou le point d'appui de la bague (22) sur le coutre circulaire (36) se trouve sur ou en-dessous d'un plan horizontal passant par le centre du palier (46) du coutre circulaire (36).

20. Soc de semeur selon au moins l'une quelconque des revendications précédentes, **caractérisé en ce que** la roue de guidage en profondeur (12) présente une vitesse de rotation supérieure à celle du coutre circulaire (36).

21. Soc de semeur selon la revendication 20, **caractérisé en ce que** la vitesse de rotation de la roue de guidage en profondeur (12) est supérieure d'au moins 10 % ou 25 % ou 50 % ou deux fois supérieure à la vitesse de rotation du coutre circulaire (36).

22. Soc de semeur selon au moins l'une quelconque des revendications précédentes, **caractérisé en ce que** ledit au moins un coutre circulaire (36) et/ou **en ce qu'**au moins la bague (22) est agencée dans un angle par rapport au sens de marche (34).

23. Soc de semeur selon au moins l'une quelconque des revendications précédentes, **caractérisé en ce que** la bague (22) et le coutre circulaire (36) sont montés dans des angles différents par rapport au sens de la marche (34).

24. Soc de semeur selon au moins l'une quelconque des revendications précédentes, **caractérisé en ce qu'**une roue de guidage en profondeur (12) se compose de deux bagues (22).

25. Soc de semeur selon au moins l'une quelconque des revendications précédentes, **caractérisé en ce que** des dispositifs de mesure sont associés à la roue de guidage en profondeur (12) pour la saisie sensorielle de la pression d'enterrage du soc.

26. Soc de semeur selon au moins l'une quelconque des revendications précédentes, **caractérisé en ce qu'**il est constitué sous forme de soc mono-coutre ou de soc à deux coutres ou en combinaison d'au moins un coutre circulaire et un outil de sillonnage.
